# DEMANDE DE BREVET EUROPEEN

(11) **EP 4 644 219 A1**
(43) Date de publication de la demande: **05.11.2025**
(21) Numéro de dépôt: 25167912.2
(22) Date de dépôt: 02.04.2025
(51) Int. Cl.: B62K 21/00, B62K 19/32, B62D 5/00, B62K 5/027, B62K 25/00, B62K 5/00, B62D 1/16

(54) **COLONNE DE DIRECTION DE VÉHICULE LÉGER ÉQUIPÉ DE BUTÉES PROGRESSIVES DE FIN DE COURSE DE PIVOTEMENT**

(30) Priorité: 03.05.2024 FR 2404633
(71) Demandeur: Stellantis Auto SAS, 78300 Poissy (FR)
(72) Inventeur: AFRIAD, IDRISS, 20200 CASABLANCA (MA); SERTANY, SOUKAINA, 20200 CASABLANCA (MA)
(74) Mandataire: BCIP

(57) **Abrégé**

Colonne de direction de véhicule léger comprenant un tube de direction (4) fixé à un châssis du véhicule, un arbre (6) de support d'une roue directrice du véhicule (10) aligné axialement et guidé en rotation dans ce tube (4), et un dispositif de butée (20) comprenant au moins une sangle souple (34) insérée entre le tube (4) et l'arbre (6), présentant une largeur disposée parallèlement à l'axe, et suivant sa longueur une extrémité liée à l'arbre (6) et l'autre extrémité liée au tube (4) en permettant un angle de rotation.

## Description

001. La présente invention concerne une colonne de direction de véhicule léger équipé de butées progressives de fin de course de pivotement, ainsi qu'un véhicule léger supporté par une colonne de direction de ce type.

002. Un type de véhicule électrique léger connu, comprenant deux roues arrière motrices et une unique roue avant, afin de limiter sa masse et son encombrement, destiné à des livraisons urbaines, comporte une colonne de direction disposée dans le plan médian de la roue avant, comprenant un tube fixé au châssis formant le guidage en rotation d'un arbre qui se prolonge vers le bas par un bras ou une fourche recevant la roue avant. Un guidon fixé directement en haut de l'arbre, au-dessus du tube de châssis, commande le pivotement de la roue avant.

003. Ce type de véhicule électrique comporte généralement un plateau ou un caisson à l'arrière permettant de faire des livraisons de marchandises sans émission de gaz polluants. Le véhicule à trois roues présente une faible masse, et un encombrement réduit qui facilite la circulation en ville.

004. La colonne de direction comporte habituellement des butées rigides de fin de course qui limitent le pivotement de la direction afin d'éviter d'aller au-delà d'un angle de braquage maximum, pour empêcher en particulier la roue de venir buter sur la carrosserie.

005. Pour cela il est connu de former à la base de la colonne de direction dans l'axe du châssis un rebord métallique formant une butée fixe, et sur le départ de l'arbre sous cette colonne deux butées métalliques qui encadrent la butée fixe de manière à permettre un même angle de pivotement de cet arbre de chaque côté.

006. Toutefois cette solution comprenant des butées métalliques pose des problèmes de brutalité d'engagement de l'arrivée en appui qui entraîne des chocs, des usures et des risques de casse. Les chocs en bout de course de pivotement génèrent des bruits et créer un inconfort. De plus les butées extérieures visibles à la base de la colonne de direction forment des parties peu esthétiques et qui peuvent causer des incidents.

007. En variante, une autre solution connue, présentée notamment par le document EP-A1-2848508, comporte une bague serrée sur l'arbre et une autre fixée dans le tube de direction, comprenant chacune des parties en saillie ou en creux qui vont s'ajuster l'une dans l'autre lors du pivotement maximum.

008. On obtient des butées intégrées dans la colonne de direction, invisibles et protégées, mais qui posent toujours des problèmes de brutalité d'arrêt lors du braquage maximum avec des risques d'usure et de rupture. 009. La présente invention a notamment pour but d'éviter ces problèmes de l'art antérieur.

010. Elle propose à cet effet une colonne de direction de véhicule léger comprenant un tube de direction fixé à un châssis du véhicule, et un arbre de support d'une roue directrice du véhicule aligné axialement et guidé en rotation dans ce tube, cette colonne étant remarquable en ce qu'elle comporte un dispositif de butée comprenant au moins une sangle souple insérée entre le tube et l'arbre, présentant une largeur disposée parallèlement à l'axe, et suivant sa longueur une extrémité liée à l'arbre et l'autre extrémité liée au tube en permettant un angle de rotation.

011. Un avantage de cette colonne de direction est que, de manière entièrement intégrée dans le tube, en choisissant une souplesse suffisante d'élongation de la sangle, on obtient lors d'un pivotement de la direction un enroulement de cette sangle sur l'arbre, puis arrivé au bout de cet enroulement, une traction longitudinale sur la sangle qui arrête le pivotement en s'allongeant légèrement.

012. La sangle présentant une largeur parallèle à l'axe, donne lors de cet arrêt une traction régulière sur toute cette largeur qui apporte une progressivité de la butée, tout en faisant travailler son matériau de manière égale sur sa largeur. On obtient une butée progressive qui n'est pas visible, entièrement protégée dans la colonne de direction, apportant une souplesse en fin de course qui, en évitant des chocs, limite les usures et assure le confort.

013. La colonne de direction, selon l'invention, peut comporter de plus une ou plusieurs des caractéristiques suivantes, qui peuvent être combinées entre elles.

014. Avantageusement, le dispositif de butée comporte un manchon extérieur lié au tube et un manchon intérieur lié à l'arbre.

015. Dans ce cas, avantageusement les sangles et les manchons sont réalisés par un même moulage.

016. En particulier, le moulage peut comporter un matériau en élastomère. 017. Avantageusement, les deux manchons et les sangles comportent une même longueur axiale.

018. En particulier, les manchons peuvent être maintenus sur l'arbre et dans le tube par un embranchement ou par un sertissage.

019. Avantageusement, la colonne de direction comporte deux sangles disposées symétriquement par rapport à un plan axial.

020. Avantageusement, chaque sangle comporte suivant sa longueur dans la position de repos plusieurs pliages.

021. L'invention a aussi pour objet automobile équipé d'une unique roue avant, remarquable en ce qu'il comporte une colonne de direction comprenant l'une quelconque des caractéristiques précédentes, maintenant cette roue avant.

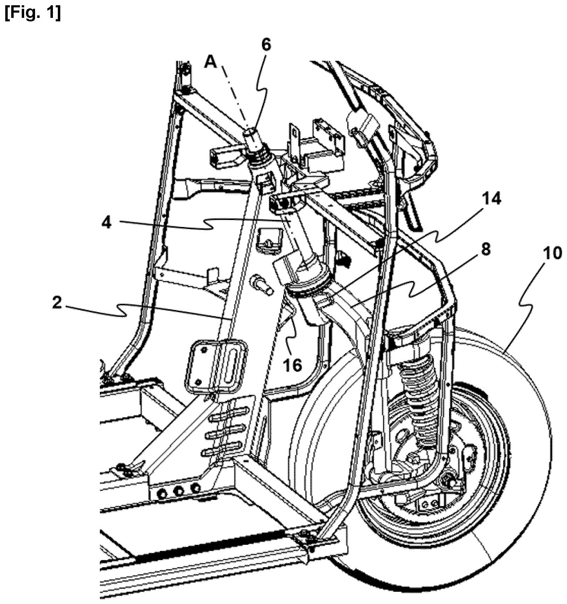

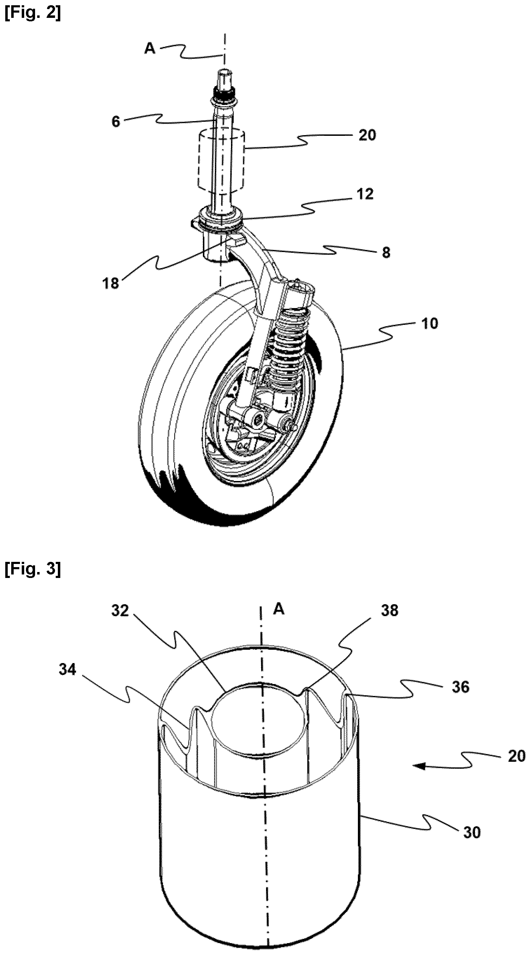

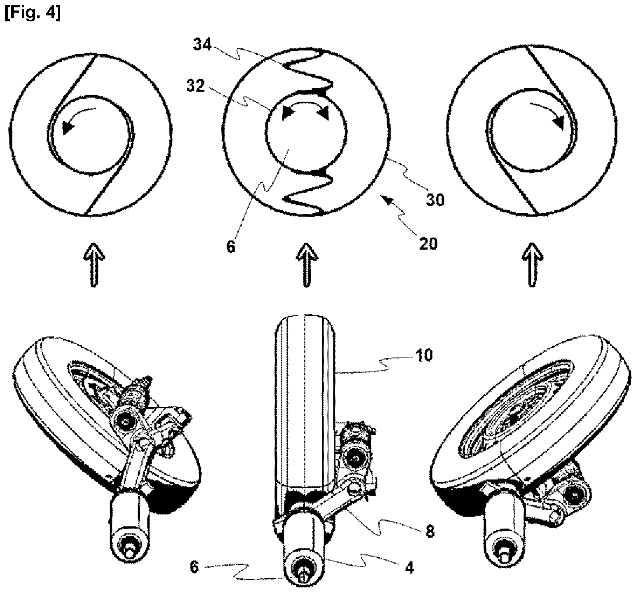

022. L'invention sera mieux comprise et d'autres caractéristiques et avantages apparaîtront plus clairement à la lecture de la description ci-après donnée à titre d'exemple, en référence aux dessins annexés dans lesquels :
023. [Fig. 1] est une vue de l'avant d'un véhicule léger comprenant une colonne de direction selon l'art antérieur ;
024. [Fig. 2] est une vue de détail de l'arbre de la colonne de direction avec son bras de suspension de ce véhicule ;
025. [Fig. 3] est une vue d'un dispositif de butée souple d'une colonne de direction selon l'invention qui est au repos ;
026. [Fig. 4] présente le fonctionnement de cette colonne de direction successivement en pivotement maximum à gauche, en ligne droite et en pivotement maximum à droite.

027. Dans l'ensemble du document la direction supérieure ou dessus est relative à un véhicule posé sur un sol horizontal.

028. Les figures 1 et 2 présentent un véhicule automobile léger comportant un châssis tubulaire disposant à l'avant dans un plan médian un tube sensiblement vertical de section rectangulaire 2, partant du plancher, qui reçoit en partie supérieure un tube circulaire 4 d'une colonne de direction disposée suivant un axe principal A.

029. Un arbre de direction 6 aligné axialement dans le tube de direction 4, est guidé en rotation à ses extrémités par deux paliers 12 comprenant des roulements à billes. La base de l'arbre 6 supporte un bras de suspension 8 recevant à son extrémité une roue avant directrice du véhicule 10. L'extrémité supérieure de l'arbre 6 reçoit un guidon de commande qui n'est pas représenté.

030. Le tube rectangulaire du châssis 2 comporte en partie supérieure sur sa face tournée vers l'avant un rebord 16 formé par une tôle pliée. La base de l'arbre de direction 6 comporte deux butées 18 disposées symétriquement et alignées suivant la direction transversale du véhicule, venant buter sur le rebord 16 après un pivotement de la direction qui est inférieur à un quart de tour, d'un côté ou de l'autre.

031. La figure 3 présente un dispositif de butée souple 20, indiqué en pointillé figure 2, comprenant suivant l'axe principal A un manchon cylindrique extérieur 30 et un manchon cylindrique intérieur 32 qui sont reliés par deux sangles souples 34 disposées symétriquement par rapport à un plan axial.

032. Le manchon extérieur 30 est bloqué dans le tube de direction 4 et le manchon intérieur 32 est bloqué autour de l'axe 6, par tout procédé comme un embranchement à force ou un collage, de manière à solidariser ces manchons sur leurs supports.

033. Chaque sangle souple 34 présentant une largeur parallèle à l'axe A, comporte une longueur comprenant une liaison d'extrémité extérieure 36 fixée dans le manchon extérieur 30 et une liaison d'extrémité intérieure 38 fixée autour du manchon intérieur 32, qui sont radialement alignées. Dans la position de repos, chaque sangle 34 comporte en coupe transversale deux pliages donnant une longueur de sangle disponible entre les deux extrémités 34, 38 pour le pivotement.

034. Avantageusement, le dispositif de butée complet 20 est formé par un unique moulage réalisant en même temps les deux manchons 30, 32 et les sangles 34 les reliant, ce qui permet de produire cet ensemble de manière économique comprenant déjà les liaisons 36, 38 entre ces éléments.

035. La figure 4 présente au milieu la direction du véhicule qui est en ligne droite, les deux sangles 34 comportant leurs pliages successifs permettant un débattement de la direction à droite ou à gauche, avec un déploiement progressif de ces pliages.

036. Sur la gauche de la figure 4, le conducteur tourne la direction à gauche, chaque sangle 34 présente des pliages qui se déploient progressivement, pour finir par être complètement tendue. Sur la droite de la figure 4, la direction tourne à droite avec, de manière symétrique, une tension progressive des deux angles 34.

037. Arrivée près du pivotement maximum, chaque sangle 34 se déforme par une légère élongation élastique, donnant une force croissante de retenue sur la dernière partie de rotation angulaire formant une butée progressive. En fin de course, les deux sangles 34 sont à leur déformation maximum donnant la butée finale, avec une égalité des forces sur ces deux sangles qui s'appliquent de manière symétrique et équilibrée.

038. Avantageusement, l'ensemble des éléments de la butée souple 20 présente une même longueur axiale, ce qui permet d'utiliser tout l'espace dans la colonne de direction pour répartir les contraintes entre les composants, et pour optimiser l'adhérence sur l'arbre 6 et dans le tube 4.

## Revendications

1. Colonne de direction de véhicule léger comprenant un tube de direction (4) fixé à un châssis du véhicule, et un arbre (6) de support d'une roue directrice du véhicule (10) aligné axialement et guidé en rotation dans ce tube (4), **caractérisée en ce qu'**elle comporte un dispositif de butée (20) comprenant au moins une sangle souple (34) insérée entre le tube (4) et l'arbre (6), présentant une largeur disposée parallèlement à l'axe (A), et suivant sa longueur une extrémité (38) liée à l'arbre (6) et l'autre extrémité (36) liée au tube (4) en permettant un angle de rotation.

2. Colonne de direction selon la revendication 1, **caractérisée en ce que** le dispositif de butée (20) comporte un manchon extérieur (30) lié au tube (4) et un manchon intérieur (32) lié à l'arbre (4).

3. Colonne de direction selon la revendication 2, **caractérisée en ce que** les sangles (34) et les manchons (30, 32) sont réalisés par un même moulage.

4. Colonne de direction selon la revendication 3, **caractérisée en ce que** le moulage comporte un matériau en élastomère.

5. Colonne de direction selon l'une quelconque des revendications 2 à 4, **caractérisée en ce que** les deux manchons (30, 32) et les sangles (34) comportent une même longueur axiale.

6. Colonne de direction selon l'une quelconque des revendications 2 à 5, **caractérisée en ce que** les manchons (30, 32) sont maintenus sur l'arbre (6) et dans le tube (4) par un embranchement ou par un sertissage.

7. Colonne de direction selon l'une quelconque des revendications précédentes, **caractérisée en ce qu'**elle comporte deux sangles (34) disposées symétriquement par rapport à un plan axial.

8. Colonne de direction selon l'une quelconque des revendications précédentes, **caractérisée en ce que** chaque sangle (34) comporte suivant sa longueur dans la position de repos plusieurs pliages.

9. Véhicule automobile équipé d'une unique roue avant (10), **caractérisé en ce qu'**il comporte une colonne de direction selon l'une quelconque des revendications précédentes, maintenant cette roue avant (10).
